(19) Europäisches Patentamt
European Patent Office
Office européen des brevets

(11) **EP 3 354 934 B1**

(12) **EUROPÄISCHE PATENTSCHRIFT**

(45) Veröffentlichungstag und Bekanntmachung des Hinweises auf die Patenterteilung:
**24.06.2020 Patentblatt 2020/26**

(51) Int Cl.:
***F16H 49/00*** *(2006.01)*     ***F16H 25/06*** *(2006.01)*

(21) Anmeldenummer: **18153511.3**

(22) Anmeldetag: **25.01.2018**

(54) **KOAXIALGETRIEBE MIT POSITIVER ÜBERSETZUNG**

COAXIAL TRANSMISSION WITH POSITIVE TRANSLATION

ENGRENAGE COAXIALE À TRADUCTION POSITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2017 DE 102017101565**

(43) Veröffentlichungstag der Anmeldung:
**01.08.2018 Patentblatt 2018/31**

(73) Patentinhaber: **WITTENSTEIN SE**
**97999 Igersheim (DE)**

(72) Erfinder: **Schreiber, Heiko**
**02692 Doberschau (DE)**

(74) Vertreter: **Zimmermann & Partner**
**Patentanwälte mbB**
**Postfach 330 920**
**80069 München (DE)**

(56) Entgegenhaltungen:
**WO-A1-2011/160314     DE-A1-102015 105 525**
**GB-A- 153 982     GB-A- 400 282**
**US-A- 3 468 175**

## Beschreibung

### Gebiet der Erfindung

Die Erfindung betrifft ein Getriebe und ein Verfahren zum Herstellen eines Getriebes.

### Stand der Technik

Aus dem Stand der Technik sind Getriebe bekannt, welche Zähne umfassen, die in einem Zahnträger radial verschieblich gelagert sind. Zum Antrieb der Zähne werden Antriebselemente mit einer Profilierung, wie beispielsweise Kurvenscheiben, verwendet. Die Zähne greifen in Innenzähne einer Verzahnung ein, sodass es zu einer Relativbewegung zwischen dem Zahnträger mit den Zähnen und der Verzahnung kommt. Die Relativbewegung zwischen Verzahnung und Zähnen ist dabei um mindestens eine Größenordnung geringer als die Bewegung des Antriebselementes mit der Profilierung. Auf diese Weise lassen sich hohe Übersetzungen erzielen, ein Beispiel eines solchen Getriebes ist in der DE 10 2007 011 175 A1 veröffentlicht. Ein weiteres Beispiel, veröffentlicht in der DE 10 2015 105 525 A1, betrifft ein Getriebe, ein Schwenksegment und ein Verfahren zum Betreiben eines Getriebes.

Ein kritischer Punkt dieser Getriebe ist die Lagerung der Zähne auf der Kurvenscheibe sowie die an den Lagerflächen im Zahnträger wirkenden Kräfte. Eine Reduzierung der Kräfte bei gleichem Drehmoment oder eine Erhöhung des vom Getriebe übertragenen Drehmoments bei gleichbleibenden Kräften ist wünschenswert, um bspw. die Lebensdauer des Getriebes oder die maximal übertragbaren Drehmomente zu erhöhen. Im Übrigen führen niedrigere Kräfte bei gleichbleibendem Drehmoment unter Umständen zu weniger Reibung und können so den Wirkungsgrad des Getriebes erhöhen.

### Offenbarung der Erfindung

Aufgabe der Erfindung ist es, Getriebe anzugeben, welche gegenüber aus dem Stand der Technik bekannten Getrieben verbessert sind, wobei eine verringerte Reibung und damit weniger Wärmeentwicklung oder ein erhöhtes maximal zulässiges Drehmoment oder eine Verringerung innerer Kräfte erreicht werden soll. Weiterhin ist es Aufgabe der Erfindung ein Verfahren zum Herstellen eines solchen Getriebes anzugeben.

Die Aufgabe wird mit einem Getriebe nach dem Anspruch 1 und einem Verfahren zum Herstellen eines Getriebes nach den nebengeordneten Ansprüchen gelöst. Vorteilhafte Weiterbildungen und Ausführungsformen ergeben sich aus den Unteransprüchen und aus dieser Beschreibung.

Die Erfindung betrifft ein Getriebe, insbesondere ein Koaxialgetriebe, mit einem Hohlrad mit einer nach innen gerichteten Verzahnung, einem koaxial zu dem Hohlrad angeordneten Zahnträger, in welchem eine Mehrzahl von Zähnen zum Eingriff mit der Verzahnung aufgenommen sind, wobei die Zähne in dem Zahnträger radial verschieblich gelagert sind, einem Antriebselement mit einer Profilierung zum radialen Antrieb der radial verschieblich gelagerten Zähne, wobei die Profilierung über ihren Umfang mindestens zwei Erhebungen aufweist, wobei das Getriebe derart aufgebaut ist, dass zwischen einem Antrieb über das Antriebselement und einem Abtrieb über den Zahnträger eine positive Übersetzung besteht.

Die Erfindung betrifft auch ein Verfahren zur Herstellung eines Getriebes in einer der hierin beschriebenen typischen Ausführungsformen.

Ausführungsformen der Erfindung betreffen insbesondere Koaxialgetriebe. Mit der axialen Richtung wird typischerweise die Längsachse des Getriebes bezeichnet. Ein Eingriff der Zähne in die Verzahnung des Hohlrades bezeichnet typischerweise den Eingriff der Zähne in die Innenzähne der Verzahnung, welche bei typischen Ausführungsformen kreisrund ist.

Bei typischen Ausführungsformen umfasst das Antriebselement eine Kurvenscheibe oder wird durch eine Kurvenscheibe gebildet. Der Ausdruck "Kurvenscheibe" ist typischerweise allgemein dahingehend zu verstehen, dass das entsprechende Bauteil nicht zwingend einer Scheibe ähneln muss. Vielmehr kann die Kurvenscheibe auch Teil einer Antriebswelle sein oder eine längliche Ausdehnung, insbesondere mit mehreren Abschnitten, aufweisen. Einer oder mehrere solcher Abschnitte können einen sich veränderlichen Radius aufweisen, so dass die Funktion einer Kurvenscheibe erfüllt ist. Weitere Abschnitte können andere Funktionen aufweisen und beispielsweise zylinderförmig sein oder auch mit Kanten, z.B. zur Drehmomentübertragung, versehen sein. Typischerweise bezieht sich der Ausdruck Kurvenscheibe primär auf die Funktion dieses Bauteils, nämlich eine umlaufende Profilierung bereitzustellen, um beispielsweise je nach Winkellage der Antriebswelle und damit der Kurvenscheibe die Zähne in radialer Richtung anzutreiben oder ein Zurückgleiten der Zähne in den Führungen zuzulassen.

Die Verzahnung ist typischerweise eine umlaufende Verzahnung. In Innenzähne der Verzahnung greifen die Zähne oder die Zahnköpfe der Zähne ein, wobei die Zähne typischerweise linear radial verschieblich relativ zu dem Zahnträger gelagert sind. Dabei bedeutet "linear radial" üblicherweise, dass eine Führung in radialer Richtung vorliegt, welche lediglich eine Bewegung des Zahnes in radialer Richtung zulässt. Typischerweise lässt sich durch die Führung ein Zahn in genau einer Richtung linear verschieben, dies kann beispielsweise dadurch erreicht werden, dass der Zahn über eine bestimmte Streckenlänge einen gleichbleibenden Querschnitt in Verschieberichtung aufweist, wobei der Zahnträger ebenfalls eine Öffnung für den Zahn mit gleichbleibendem Querschnitt aufweist. Üblicherweise sind die Zähne in dem Zahnträger jeweils in genau einer Richtung verschieblich gelagert, typischerweise in Richtung der Längsachse des Zahnes. Weiterhin ist bei typischen Ausführungsformen der Rotationsfreiheitsgrad der Zähne relativ zu dem Zahnträger um die Längsachse des Getriebes gesperrt. Dies kann beispielweise mit einer linearen Führung der Zähne in radialer Richtung in dem Zahnträger erreicht werden. Auf diese Weise drehen sich die Zähne mit dem Zahnträger um die Längsachse des Getriebes, allerdings nicht relativ zu dem Zahnträger.

Bei typischen Ausführungsformen der erfindungsgemäßen Getriebe ist zumindest ein Teil der Zähne biegesteif ausgeführt. Der Begriff "biegesteif" ist dabei typischerweise technisch zu verstehen, das heißt, dass Biegungen der Zähne aufgrund der Steifigkeit des Materials der Zähne derart klein sind, dass sie für die Kinematik des Getriebes zumindest im Wesentlichen unbedeutend sind. Biegesteife Zähne umfassen insbesondere Zähne, welche aus einer Metalllegierung, insbesondere Stahl oder einer Titanlegierung, einer Nickellegierung oder anderen Legierungen hergestellt sind. Weiterhin können auch biegesteife Zähne aus Kunststoff vorgesehen werden, insbesondere bei Getrieben, bei welchen auch zumindest einer der folgenden Teile ebenfalls aus Kunststoff hergestellt ist: Verzahnung an einem Hohlrad oder einem Zahnrad, Zahnträger und Antriebselement. Bei typischen Ausführungsformen der Erfindung sind der Zahnträger und die Zähne aus einer Metalllegierung oder zusätzlich noch die Verzahnung oder weiter zusätzlich das Antriebselement aus einer Metalllegierung hergestellt. Solche Getriebe bieten den Vorteil, dass sie äußerst verdrehsteif und hoch belastbar sind. Getriebe, die zumindest teilweise aus Kunststoff bestehen oder Komponenten aus Kunststoff umfassen, bieten den Vorteil, dass sie ein geringes Gewicht aufweisen können. Mit dem Ausdruck "biegesteif" ist insbesondere eine Biegesteifigkeit um eine Querachse des Zahnsegments gemeint.

Bei typischen Ausführungsformen ist zwischen dem Zahn und der Kurvenscheibe ein Schwenksegment angeordnet, welches auf einer Wälzlagerung gelagert ist, welche wiederum auf der Kurvenscheibe aufliegt. Vorteilhafte Ausführungsformen umfassen ein Schwenksegment, welches zwischen der Kurvenscheibe und jeweils mindestens einem Zahn angeordnet ist. Das Schwenksegment ermöglicht eine Verkippung des Zahnes relativ zu der Oberfläche der Kurvenscheibe oder relativ zu dem Schwenksegment. Typischerweise sind auf einem Schwenksegment mindestens zwei Zähne gelagert. Bei weiteren Ausführungsformen ist auf jeweils einem der Schwenksegmente genau ein Zahn gelagert, beispielsweise ein Rundzahn oder ein Flachzahn. Flachzähne können gegen Verdrehung um ihre eigene Achse in der Lagerung gesichert werden. Mehrere auf einem Schwenksegment gelagerte Zähne sind typischerweise in einer Reihe in axialer Richtung nebeneinander angeordnet. Mit solchen Anordnungen von mehreren Zähnen oder mit Flachzähnen kann die Laufruhe der Schwenksegmente erhöht werden. Typische Ausführungsformen der Erfindung umfassen eine Kurvenscheibe als Antriebselement. Die Kurvenscheibe weist vorzugsweise eine nicht-kreisförmige oder eine nicht-ellipsoide Bogenform oder Kurve auf. Die nicht-kreisförmige oder nicht-ellipsoide Bogenform bietet den Vorteil, dass verschiedene Kurven verwendet werden können, um beispielsweise unterschiedliche Übersetzungsverhältnisse einzustellen. Im Sinne dieser Anmeldung fallen Exzenter typischerweise unter kreisförmige oder ellipsoide Formen, da bei Exzentern lediglich die Drehachse nicht der Mittelachse der Kreisform entspricht, gleichwohl jedoch eine Kreisform vorhanden ist. Typische Kurvenscheiben umfassen zumindest oder genau zwei Erhebungen, welche typischerweise gleichverteilt über den Umfang angeordnet sind. Die Erhebungen können auch als Maxima bezeichnet werden. Mehrere Erhebungen bringen mehr Zähne in Eingriff mit der Verzahnung.

Bei typischen Ausführungsformen sind der Zahnträger oder die Verzahnung kreisförmig ausgebildet. Dies bietet den Vorteil einer einfachen Geometrie für den Zahnträger und die Verzahnung. Typischerweise erfolgt die Kraftübertragung auf der langsamen Seite des Getriebes zwischen der Verzahnung und dem Zahnträger. Dies bietet den Vorteil, dass der Weg für die Kraftübertragung äußerst kurz ist, sodass eine äußerst hohe Steifigkeit erreicht werden kann.

Die Innenzähne der Verzahnung und die Zähne weisen typischerweise gekrümmte Flanken auf. Innenzähne und Zähne weisen bei typischen Ausführungsformen jeweils Zahnköpfe auf, welche im Querschnitt einem Pyramidenstumpf oder einer Pyramide jeweils mit gekrümmten Flanken entsprechen. Für eine mögliche Ausführungsform einer Krümmung in Form einer logarithmischen Spirale wird auf die DE 10 2007 011 175 A1 verwiesen. Die gekrümmte Oberfläche bietet den Vorteil, dass die in Eingriff stehenden Flanken flächig und nicht lediglich linien- oder punktförmig anliegen. Auf diese Weise wird eine gute Lastverteilung auf viele Zähne und eine extreme Steifigkeit bei der Kraftübertragung zwischen der Verzahnung und den Zähnen erreicht.

Typische Ausführungsformen umfassen zwischen der Profilierung und den Zähnen eine Lagerung mit Schwenksegmenten und Wälzkörpern. Typischerweise sind mindestens zwei nebeneinanderliegende, insbesondere axial parallel oder versetzt liegende Zähne pro Schwenksegment vorgesehen. Auf diese Weise kann das Schwenksegment in seiner Laufbahn bzw. auf seiner jeweiligen Lauffläche stabilisiert werden. Drehungen des Schwenksegments um eine radiale Achse können vermieden werden. Typischerweise sind Wälzkörper von Ausführungsformen als Zylinderrollen oder Nadelrollen ausgebildet.

Typische Getriebe der Erfindung sind derart aufgebaut, dass zwischen einem Antrieb über das Antriebselement und einem Abtrieb über den Zahnträger eine positive Übersetzung besteht. Eine positive Übersetzung bezeichnet typischerweise eine Übersetzung, bei welcher sich das Antriebselement und der Zahnträger gleichsinnig drehen.

Bei typischen Ausführungsformen ist der Zahnträger-Zahnteilungswinkel der Zähne oder der Lagerung der Zähne im Zahnträger kleiner als der Hohlrad-Zahnteilungswinkel der Innenzähne der Verzahnung des Hohlrades. Unter der "Zahnteilung" oder dem "Zahnteilungswinkel" werden typischerweise fiktive Größen verstanden, es müssen also nicht an jeder durch den Zahnteilungswinkel vorgegebenen Position tatsächlich Zähne in dem Zahnträger vorgesehen sein. Der Zahnteilungswinkel errechnet sich jeweils aus 360° geteilt durch die Anzahl der theoretisch möglichen Positionen für Zähne im Zahnträger bzw. durch die Anzahl der tatsächlich in der Verzahnung vorhandenen Zähne in Umfangsrichtung.

Bei typischen Ausführungsformen ist nicht jede Zahnteilungswinkel-Position mit einem Zahn im Zahnträger besetzt, vielmehr ist bspw. nur jede zweite Position oder jede dritte Position oder jede vierte Position mit einem Zahn besetzt. Auf diese Weise ist reichlich Platz für die Zähne als auch für Material des Zahnträgers vorhanden, da an Positionen, an denen keine Zähne vorgesehen sind, Material des Zahnträgers vorhanden sein kann. Beispielsweise ergibt sich bei einem Positionsfaktor von 2 ausreichend Raum zwischen zwei Zähnen oder Zahnführungen für Stege des Zahnträgers zwischen den Zähnen, um den Zahnträger ausreichend auszusteifen. Bei typischen Ausführungsformen entspricht die Anzahl der Zahnführungen der Anzahl der im Zahnträger aufgenommenen Zähne. Bei typischen Ausführungsformen ist jede zweite Position, welche durch den Zahnteilungswinkel der Zähne vorgegeben ist, frei. Mit welcher Dichte die Positionen im Zahnträger belegt sind, wird durch den Positionsfaktor wiedergegeben. So bedeutet beispielsweise ein Positionsfaktor von zwei, dass nur jede zweite durch den Zahnteilungswinkel vorgegebene Position im Zahnträger mit einem Zahn belegt ist; ein Positionsfaktor von drei dementsprechend jede dritte Position. Der tatsächliche Winkelabstand zwischen den Zähnen, welche in dem Zahnträger gelagert sind, beträgt typischerweise das Zweifache, Dreifache oder Vierfache des Zahnteilungswinkels dieser Zähne oder des Zahnträgers. Bei weiteren Ausführungsformen kann auch ein mehr als Vierfacher Abstand vorgesehen sein. Der tatsächliche Winkelabstand zwischen benachbarten Zähnen errechnet sich also aus dem Zahnteilungswinkel multipliziert mit dem Positionsfaktor. Typische Positionsfaktoren sind ganzzahlige Zahlen größer oder gleich 1, weitere typische Positionsfaktoren sind größer gleich 2.

Typischerweise ist die Anzahl der theoretisch möglichen Positionen für Zähne mindestens oder genau um die Anzahl der Erhebungen größer als die Anzahl der Innenzähne der Verzahnung des Hohlrades. Ist nur jede zweite Position im Zahnträger besetzt, so beträgt die Anzahl der Zähne im Zahnträger bei einer Profilierung mit zwei Erhebungen der Anzahl der Innenzähne der Verzahnung plus die Anzahl an Erhebungen, geteilt durch den Positionsfaktor, welcher in diesem Fall zwei beträgt. Die Anzahl der Zähne berechnet sich bei der Erfindung nach folgender Formel:

$$Z_z = \frac{Z_I + E}{PF}$$

$Z_z$ = Anzahl der Zähne im Zahnträger

$Z_I$ = Anzahl der Innenzähne des Hohlrads

E = Anzahl der Erhebungen der Profilierung bzw. der Kurvenscheibe des Antriebselements

PF = Positionsfaktor

Zur Berechnung der Übersetzung zwischen einem Antrieb, welcher das Antriebselement dreht, und einem Abtrieb, welcher mit dem Zahnträger einer Ausführungsform eines erfindungsgemäßen Getriebes verbunden ist, ergibt sich folgende Formel, bei der die Anzahl der Innenzähne des Hohlrads stets negativ anzugeben ist:

$$i = 1 - \frac{(-Z_I)}{PF * Z_Z + (-Z_I)}$$

Typischerweise umfassen Ausführungsformen eine ganzzahlige Anzahl von Zähnen im Zahnträger. Bei typischen Ausführungsformen mit zwei Erhebungen der Profilierung, einer Zähnezahl im Hohlrad von 46 und einer Besetzung nur jeder zweiten durch den Zahnträger-Zahnteilungswinkel vorgegebenen Position, d.h. einem Positionsfaktor von 2, beträgt die Anzahl der Zähne im Zahnträger 24. Es ergibt sich mit obiger Formel für i eine Übersetzung von i = +24 bei Antrieb des Antriebselements und Abtrieb am Zahnträger:

$$i = 1 - \frac{-46}{2 * 24 + (-46)}$$

Bei einer weiteren Ausführungsform mit zwei Erhebungen, einer Zähnezahl im Hohlrad von 46 sowie einem Positionsfaktor von 3, beträgt die Anzahl der Zähne im Zahnträger 16. Eine andere Ausführungsform weist bei einer Zähnezahl im Hohlrad von 45 und einer Besetzung nur jeder zweiten durch den Zahnträger-Zahnteilungswinkel vorgegebenen Position, d.h. einem Positionsfaktor von 2, 24 Zähne im Zahnträger bei 3 Erhebungen auf.

Typische Getriebe umfassen Wälzkörper, welche auf der Profilierung angeordnet sind, und eine Mehrzahl von Schwenksegmenten zur Lagerung der Zähne, wobei die Schwenksegmente auf den Wälzkörpern angeordnet sind, wobei die Wälzkörper in zumindest zwei in Umlaufrichtung der Kurvenscheibe parallelen Wälzkörperreihen auf der Profilierung angeordnet sind. Typische Ausführungsformen umfassen ein oder mindestens zwei, typischerweise axial nebeneinander und/oder parallel laufend angeordnete Wälzkörperreihen pro umlaufender Reihe Schwenksegmente. Ein Schwenksegment kann auf mindestens zwei parallel umlaufenden Wälzkörperreihen gelagert sein. Dabei kann bei zwei oder mehr parallel angeordneten Reihen von Zähnen jeweils eine Wälzkörperreihe unter einer Zahnreihe angeordnet sein, so dass das Schwenksegment unter jeweils einer Zahnreihe eine Unterstützung erfährt. Eine typische Anordnung ist beispielsweise eine Anordnung der Reihe von Zähnen radial über der Wälzkörperreihe mit dazwischenliegendem Schwenksegment. Die Mittelachse der jeweiligen Zähne liegt typischerweise in den mittleren 80% oder mittleren 50% oder mittleren 20% oder zumindest im Wesentlichen mittig über den jeweiligen Wälzkörpern. Auf diese Weise werden die Wälzkörper im Wesentlichen mittig belastet. Bei typischen Ausführungsformen ist eine der Wälzkörperreihen in einer Axialebene mit einer der Reihen von Zähnen angeordnet. Typischerweise ist jeweils eine Reihe in einer Axialebene, wobei gleiche Axialebene beispielsweise bedeutet, dass die Mitten zumindest im Wesentlichen zusammenfallen und/oder die Zähne vollständig innerhalb des axial ausgedehnten Bereichs der jeweiligen Wälzkörperreihe angeordnet sind.

Typischerweise weist die Profilierung eine Lauffläche für die zumindest eine Reihe von Wälzlagern auf. Typischerweise umfasst die Profilierung zumindest zwei parallele Laufflächen. In bzw. auf jeweils einer der parallelen Laufflächen ist bei typischen Ausführungsformen jeweils eine der Wälzkörperreihen angeordnet. Auf diese Weise haben parallel laufende Wälzkörper eigene Laufflächen bzw. jede Wälzkörperreihe kann in einer definierten, eigenen Lauffläche geführt werden.

Typischerweise ist die Profilierung durch zumindest ein umlaufendes Mittelbord geteilt. Auf diese Weise können bei Ausführungsformen parallele Laufflächen geschaffen werden, typischerweise beidseits des Mittelbords. Es ist möglich, mehrere parallele Mittelborde vorzusehen, um mehr als zwei parallele Laufflächen zu schaffen, bei typischen Ausführungsformen mit zwei Reihen von Zähnen oder mehr als zwei Reihen von Zähnen.

Typischerweise umfasst die Kurvenscheibe zwei umlaufende Randborde. Die Randborde begrenzen typischerweise jeweils eine außen liegende Lauffläche nach axial außen. Mittig werden die Laufflächen typischerweise durch ein Mittelbord begrenzt. Bei typischen Ausführungsformen begrenzen die Randborde mit genau einem Mittelbord zwei Laufflächen, bei weiteren Ausführungsformen sind mehrere Mittelborde und damit auch mehr als zwei Laufflächen und ggf. auch mehr als zwei Wälzkörperreihen vorgesehen.

Das Mittelbord und/oder oder die Randborde können jeweils eine Höhe aufweisen, welche zumindest im Wesentlichen dem Durchmesser der Wälzkörper entspricht. Sie können bei weiteren Ausführungsformen eine geringfügig geringere, bspw. zwischen 0% und 10% oder zwischen 0% und 5% geringere, Höhe aufweisen als der Durchmesser. Bei weiteren Ausführungsformen liegt die Höhe des Mittelbords und/oder der Randborde bei lediglich zwischen 50% und 80% oder zwischen 50% und 95% des Durchmessers der Wälzkörper. Mittelbord und Randborde können unterschiedliche Höhen aufweisen, beispielsweise kann das Mittelbord niedriger sein als die Randborde. Randborde werden bei Ausführungsformen auch als Stabilisierungsfläche für die Schwenksegmente verwendet. Bei weiteren Ausführungsformen ist das Mittelbord höher als die Randborde, bspw. falls das Mittelbord zur Stabilisierung der Laufruhe der Schwenksegmente verwendet wird.

Typischerweise liegen die Schwenksegmente jeweils mit einer Wälzlagerfläche einerseits auf zumindest einem Teil der Wälzkörper auf und weisen auf einer der Wälzlagerfläche gegenüberliegenden Seite jeweils eine Zahnlagerfläche auf, wobei typischerweise auf einer Zahnlagerfläche zumindest zwei Zähne gelenkig gelagert sind. Bei typischen Ausführungsformen ist die Zahnlagerfläche derart ausgebildet, so dass durch die Zahnlagerfläche eine gemeinsame Drehachse für die mindestens zwei Zähne gebildet wird. Typische Zahnlagerflächen von Ausführungsformen umfassen jeweils einen runden Flächenabschnitt für jeweils zumindest einen Zahn und/oder mehrere axial parallel angeordnete Zähne, wobei der Mittelpunkt des Radius des runden Flächenabschnitts zumindest im Wesentlichen mit der Wälzlagerfläche zusammenfällt. Typischerweise fällt eine Drehachse des durch die Zahnlagerfläche gebildeten Zahnlagers zumindest im Wesentlichen mit der Wälzlagerfläche zusammenfällt. Die Zahnlagerfläche kann im Bereich des Zahnlagers als Wulst und/oder als Kreisabschnitt ausgebildet sein.

Typische Getriebe von Ausführungsformen umfassen parallel umlaufende Reihen von Zähnen. Typisch sind mindestens oder genau zwei Reihen Zähne. Typischerweise laufen die Zähne in parallel umlaufenden Reihen von Führungen des Zahnträgers.

Bei typischen Ausführungsformen sind jeweils zumindest zwei parallele Zähne auf einem Schwenksegment angeordnet. Typischerweise gehören die zwei parallelen Zähne zu den zwei parallelen Reihen von Zähnen, welche beispielsweis in Führungen in dem Zahnträger geführt sind. Bei Ausführungsformen sind zwei parallele Zähne von parallelen Reihen von Zähnen in Axialrichtung hintereinander auf einem Schwenksegment, typischerweise auf einem Wulst oder in einer Vertiefung des Schwenksegments, angeordnet.

Typische Zahnträger von Ausführungsformen umfassen zumindest einen sich radial nach innen oder radial nach außen erstreckenden Anlaufflansch, welcher die Schwenksegmente zumindest teilweise in axialer Richtung übergreift. Auf diese Weise besteht die Option, auf zusätzliche Anlaufscheiben zu verzichten. Der Anlaufflansch kann integral mit dem Zahnträger ausgeführt sein oder an dem Zahnträger befestigt sein. Typische Ausführungsformen weisen keine Anlaufscheibe auf. Einige Ausführungsformen umfassen eine Anlaufscheibe zumindest einseitig axial neben den Schwenksegmenten und/oder neben den Wälzkörpern zur Führung der Schwenksegmente.

Bei Ausführungsformen mit Anlaufflansch an dem Zahnträger umfasst typischerweise zumindest einer der Anlaufflansche eine Antriebslagerfläche, welche unmittelbar mit Antriebslagerwälzkörpern zusammenwirkt. Typischerweise ist ein Lager zwischen Zahnträger und der Kurvenscheibe oder einer mit der Kurvenscheibe verbundenen Welle integral ausgeführt. Solche Ausführungsformen können platzsparend sein. Typischerweise sind die Antriebslagerwälzkörper unmittelbar auf der Kurvenscheibe gelagert. Bei weiteren Ausführungsformen ist zwischen Zahnträger und Kurvenscheibe ein Lager mit Lagerringen vorgesehen. Dies kann die Herstellung vereinfachen.

Typischerweise ist an den Schwenksegmenten in axialer Richtung beidseitig und/oder randseitig des Schwenksegments jeweils eine Bordlagerfläche angeordnet. Bei weiteren Ausführungsformen sind an den Schwenksegmenten in axialer Richtung mittig Bordlagerflächen angeordnet, welche beispielsweise dazu vorgesehen sind auf einem Mittelbord aufzuliegen. Bei Ausführungsformen mit zwei beidseitigen und/oder randseitigen Bordlagerflächen können die Bordlagerflächen zumindest teilweise auf den Randborden der Kurvenscheibe aufliegen. Auf diese Weise kann ein Verkippen der Schwenksegmente verhindert werden und ein ruhiger Lauf sichergestellt werden.

Vorteile typischer Ausführungsformen sind eine erhöhte Belastbarkeit, verlängerte Standzeit oder eine kompaktere Bauweise. Die Umfangskräfte die am Zahn gegenüber der Kurvenscheibe sowie dem Hohlrad angreifen, erzeugen ein Drehmoment, welches sich in der Führung des Zahnträgers abstützt. Am Zahn ergeben sich 2 Kontaktpunkte gegenüber der Führung im Zahnträger. Bei typischen Ausführungsformen von erfindungsgemäßen Getrieben wirken die Umfangskräfte an der Kurvenscheibe bzw. dem Antriebselement gleichsinnig zu den Umfangskräften des Hohlrades, was im Gegensatz zu Getrieben aus dem Stand der Technik zu einer Verringerung der Reaktionskräfte in der Zahnführung führt. Die Kräfte zur Führung der Zähne im Zahnträger werden bei Ausführungsformen um etwa 10% an der äußeren Zahnanlage im Zahnträger und etwa 50% an der inneren Zahnanlage im Zahnträger reduziert. Die dadurch verringerten Reibkräfte verringern im Zugbetrieb, d.h. bei einem Antrieb über die Kurvenscheibe, auch die Reaktionskräfte in der Lagerung auf der Kurvenscheibe. Die Reduktion dort beträgt ca 12% im Zugbetrieb. Da diese Lagerung häufig das bestimmende Element für das maximale Drehmoment bzw. die Lebensdauer des Getriebes ist, kann das Drehmoment oder die Lebensdauer des Getriebes erhöht werden. Weiterhin kann auch der Wirkungsgrad erhöht werden, um etwa 1% - 3%.

Kurze Beschreibung der Zeichnungen

Nachfolgend wird die Erfindung anhand der beiliegenden Zeichnungen näher erläutert, wobei die Figuren zeigen:

Fig. 1    zeigt schematisch eine erste Ausführungsform der Erfindung in einer teilweisen schematischen Schnittansicht; und

Fig. 2    zeigt schematisch eine weitere Ausführungsform in einem Halbschnitt.

Beschreibung von Ausführungsbeispielen

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsform werden unter Umständen in verschiedenen Figuren und für verschiedene Ausführungsformen gleiche Bezugszeichen für gleiche oder ähnliche Teile verwendet, um die Beschreibung übersichtlicher zu gestalten. Dies bedeutet jedoch nicht, dass entsprechende Teile der Erfindung auf die in den Ausführungsformen dargestellten Varianten beschränkt sind.

Zahnträger gattungsgemäßer Getriebe sind beispielsweise in der DE 10 2015 105524 A1 gezeigt. Solche Getriebe weisen einen Zahnträger-Zahnteilungswinkel der Zähne auf, welcher typischerweise größer ist als der Hohlrad-Zahnteilungswinkel der Innenzähne der Verzahnung des Hohlrades. Mit einem solchen Aufbau lassen sich große negative Übersetzungen zwischen Antriebselement und Zahnträger erreichen. Ausgehend von solchen Getrieben wird nachfolgend beschrieben, wie Getriebe der Erfindung mit positiven Übersetzungen zwischen Antriebselement und Zahnträger aufgebaut sind.

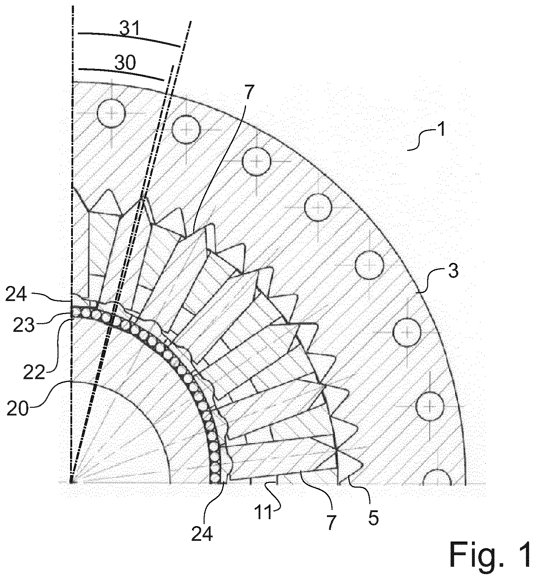

In der Fig. 1 ist ein Ausführungsbeispiel in einer teilweisen, geviertelten, schematischen Schnittansicht gezeigt. Die Fig. 1 zeigt in einem geviertelten Schnitt schematisch ein Getriebe 1, welches ein Hohlrad 3 mit einer innen liegenden, umlaufenden Verzahnung 5 aufweist. Die übrigen drei weiteren Viertel des Getriebes 1 sind im Schnitt dem dargestellten Schnitt analog gespiegelt aufgebaut.

In die Verzahnung 5 greifen Zähne 7 ein. Zur besseren Übersichtlichkeit ist nicht jeder Zahn 7 der Fig. 1 auch mit dem Bezugszeichen 7 versehen. Typischerweise sind zwei axial parallele Zahnkränze mit einzelnen Zähnen 7 vorgesehen. Die Zähne 7 sind in einem Zahnträger 11 radial verschieblich gelagert. Hierzu weist der Zahnträger 11 radial ausgerichtete kanalartige runde oder schlitzartige Öffnungen auf, welche eine radiale Führung der Zähne 7 in dem Zahnträger 11 gewährleisten. Aufgrund der radialen Führung in den Öffnungen ist es für die Zähne 7 lediglich möglich, sich in radialer Richtung entlang ihrer Längsachse zu bewegen, insbesondere ist eine Verdrehung um eine Längsachse des Getriebes 1 relativ zu dem Zahnträger 11 ausgeschlossen.

Die Längsachse der Zähne bezeichnet typischerweise die vom Zahnfuß zum Zahnkopf verlaufende Achse, während die Längsachse des Getriebes in Richtung der Drehachse des Getriebes zeigt. Dies kann beispielsweise die Drehachse des als Abtrieb verwendbaren Zahnträgers sein oder auch die Drehachse einer Kurvenscheibe.

Die Zähne 7 werden durch ein Antriebselement in Form einer Kurvenscheibe 20 angetrieben, welche als hohle Kurvenscheibe 20 ausgeführt ist. Die Kurvenscheibe 20 weist eine Profilierung 22 auf, um die Zähne 7 in radialer Richtung anzutreiben. Die Profilierung 22 weist einen Verlauf mit zwei Erhebungen über den Umfang auf, sodass jeweils gegenüberliegende Zähne 7 am weitesten in Zahnlücken der Verzahnung 5 eingetreten sind (nicht sichtbar im Viertelschnitt der Fig. 1).

Die Zähne 7 sind bei dem in Fig. 1 dargestellten Getriebe 1 mit einer Wälzlagerung auf der Profilierung des Antriebselements angeordnet. Die Wälzlagerung umfasst Wälzkörper 23, welche bei diesem Ausführungsbeispiel als Nadelrollen ausgeführt sind.

Bei dem Ausführungsbeispiel der Fig. 1 wird der Abtrieb an dem Zahnträger abgegriffen, wobei das Hohlrad mit der Verzahnung festgelegt wird.

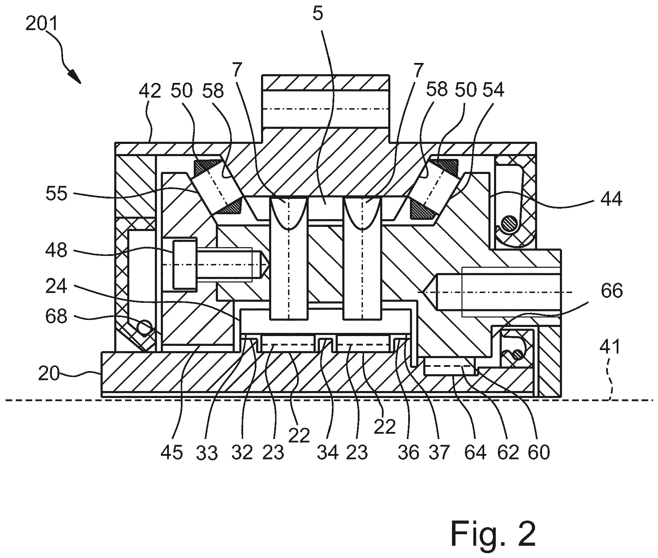

Das Getriebe 1 umfasst eine segmentierte Lagerung für die Zähne 7. Die segmentierte Lagerung umfasst Schwenksegmente 24, welche jeweils auf der dem Zahn 7 zugewandten Seite eine runde, insbesondere abschnittsweise zylinderförmige Zahnlagerfläche (siehe Fig. 2) aufweisen, welche einen Wulst bildet, auf der der Fuß eines Zahnes 7 oder bei typischen Ausführungsformen zwei, drei oder vier Zähne in axialer Richtung des Getriebes 1 nebeneinander angeordnet sein können. Der Wulst verhindert zusammen mit einer entsprechenden Ausnehmung im Zahnfuß des jeweiligen Zahnes 7 ein Verrutschen des Zahnes 7 auf dem Schwenksegment 24.

Mit den Wulsten werden jeweils Fußgelenke für die Zähne 7 ausgebildet, sodass sich die Zähne 7 relativ zu den Schwenksegmenten 24 verkippen können, um eine zwangsfreie Führung zu gewährleisten. Die Schwenksegmente 24 sind relativ zueinander in Umlaufrichtung verschieblich, sodass sich die Abstände zwischen den Schwenksegmenten 24 verändern lassen. Auf diese Weise ist auch der Freiheitsgrad in Umlaufrichtung der Schwenksegmente 24 nicht gesperrt. Dies ermöglicht eine weitgehend zwangsfreie Führung und ein weitgehend zwangsfreien radialen Antrieb der Schwenksegmente 24 durch die Profilierung 22 der Kurvenscheibe 20. Für eine Minimierung des Reibungswiderstandes zwischen der Profilierung 22 und den Schwenksegmenten 24 sind die Wälzkörper 23 als Nadelrollen vorgesehen. Bei weiteren Ausführungsformen sind Zylinderrollen oder andere Wälzlager zur Lagerung von Schwenksegmenten vorgesehen.

Wie in Fig. 1 zu sehen ist, ist der Zahnträger-Zahnteilungswinkel der Zähne 7 in dem Zahnträger 11 kleiner ist als der Hohlrad-Zahnteilungswinkel der Innenzähne der Verzahnung 5 des Hohlrades. Dies ist in Figur 1 dargestellt durch einen doppelten Zahnträger-Zahnteilungswinkel 30 und einen doppelten Hohlrad-Zahnteilungswinkel 31. Dabei ist zu berücksichtigen, dass nur jede zweite durch den Zahnträger-Zahnteilungswinkel vorgegebene Position durch einen Zahn 7 in dem Zahnträger 11 besetzt ist.

Insgesamt weist das Getriebe, von dem in der Fig. 1 nur ein Viertel im Schnitt dargestellt ist, 26 Zähne und 50 Innenzähne sowie zwei Erhebungen der Profilierung auf. Damit ist bei diesem Ausführungsbeispiel die Anzahl der Zähne um eins größer als die Hälfte der Anzahl der Innenzähne. Der Positionsfaktor bei dem Ausführungsbeispiel beträgt zwei, es ist also nur jede zweite durch den theoretischen Zahnträger-Zahnteilungswinkel vorgegebene Position im Zahnträger mit einem Zahn besetzt. Es ergibt sich eine positive Übersetzung von $i = +26$.

In der Fig. 2 ist eine weitere Ausführungsform in einem Halbschnitt gezeigt. Die Merkmale der Ausführungsform der Fig. 2 sind mit den Merkmalen der Ausführungsform der Fig. 1 kombinierbar, insbesondere weist das Getriebe der Fig. 2 ebenfalls eine positive Übersetzung auf, da die Anordnung und Anzahl der Zähne in einem Schnitt senkrecht zur Längsachse der Ausführungsform der Fig. 1 entspricht. Besondere Vorteile aus der Kombination ergeben sich dahingehend, dass die Merkmale, welche in den Fig. 1 und Fig. 2 dargestellt sind, eine besonders kompakte Bauform bei hoher Belastbarkeit ergeben. Für gleiche oder ähnliche Teile werden gleiche Bezugszeichen verwendet.

Das Getriebe 201 der Fig. 2 umfasst eine Kurvenscheibe 20 als Antriebselement, welche integral mit einer Antriebswelle ausgeführt ist und dadurch eine, in axialer Richtung, längliche Gestalt aufweist. Die Kurvenscheibe 20 umfasst zwei Profilierungen 22, welche auch als Laufbahnen oder Schwenklagerlaufbahnen bezeichnet werden können. Diese Profilierungen 22 weisen einen sich über den Umfang verändernden Radius auf, insbesondere weisen sie jeweils zwei Maxima, welche auch als Erhebungen bezeichnet werden können, und zwei Minima auf, wobei die beiden Profilierungen 22 die gleiche Winkellage der sich verändernden Radien aufweisen.

Weitere Ausführungsformen weisen lediglich eine Laufbahn oder eine Profilierung auf. Bei alternativen Ausführungsformen können auch drei oder mehr Profilierungen oder Laufbahnen für Wälzkörper vorgesehen sein.

Auf den Profilierungen 22 sind Wälzkörper 23 gelagert. Auf diesen Wälzkörpern 23 sind Schwenksegmente 24 gelagert, wobei in der Schnittansicht der Fig. 1 lediglich ein Schwenksegment 24 dargestellt ist. Das Schwenksegment 24 liegt somit auf zwei Reihen umlaufender Wälzkörper 23 auf.

Das Schwenksegment 24 umfasst einen Wulst auf der radialen äußeren Seite des Schwenksegments 24, welcher in Nuten von zwei Zähnen 7 eingreift. Die Zähne 7 sind in ihrer axialen Lage bezüglich der Längsachse 41 des Getriebes 1 zumindest im Wesentlichen mittig über den Wälzkörpern 23 gelagert, wobei jeweils ein Zahn 7 über einem der beiden Wälzkörper 23 gelagert ist. Auf diese Weise wird eine durchgängige Kraftübertragung durch das Schwenksegment 24 erreicht. Außerdem werden die als Nadelrollen ausgeführten Wälzkörper 23 etwa mittig belastet. Weiterhin kann die Baulänge der Wälzkörper 23 selbst durch diese Maßnahme verringert werden, wobei sich die Laufstabilität erhöhen kann.

Die Kurvenscheibe 20 weist zur Begrenzung der Profilierungen 22 Borde 32, 34 und 36 auf. Der Bord 34 liegt mittig zwischen den Wälzkörpern 23, wohingegen die beiden Borde 32 und 36 die Bewegungsfreiheit der Wälzkörper 23 jeweils in axialer Richtung nach außen beschränken. Das Schwenksegment 24 weist Bordlagerflächen 33 und 37 auf, welche sich jeweils auf den Borden 32 und 36 abstützen können. Bei weiteren Ausführungsformen stützt sich das Schwenksegment auf dem mittigen Bord ab. Auf diese Weise wird die Laufruhe des Schwenksegments 24 erhöht.

Die Zähne 7 greifen in eine gemeinsame Verzahnung 5 ein, welche integral mit einem Gehäuse 42 des Getriebes 1 ausgeführt ist. Auf diese Weise ist das Hohlrad mit der Verzahnung integral im Gehäuse ausgeführt, so dass auf Einzelteile zu Gunsten einer kompakten Bauweise und einfachen Herstellung verzichtet werden kann. Bei weiteren Ausführungsformen sind Hohlrad und Gehäuse getrennt ausgeführt.

Die Zähne 7 sind in radial ausgerichteten Führungen in einem zweiten Zahnträgerteil 44 eines Zahnträgers aufgenommen. Der Zahnträger umfasst außerdem noch ein erstes Zahnträgerteil 45, welches mit dem zweiten Zahnträgerteil 44 durch ein als Schraube ausgeführtes Verbindungsmittel 48 verbunden ist. Über den Umfang des Zahnträgers sind eine Mehrzahl von Verbindungsmitteln 48 vorgesehen, bei der beispielhaften Ausführungsform der Fig. 1 insgesamt sechs Stück.

Bei weiteren Ausführungsformen kann auch eine abweichende Anzahl von Verbindungsmitteln vorgesehen werden, wobei auch eine ungerade Anzahl möglich ist. Die Verbindungsmittel können gleichmäßig über den Umfang des Zahnträgers verteilt werden, es ist hingegen auch möglich, unterschiedliche Winkelabstände vorzusehen, beispielsweise um ein Zusammenfügen der beiden Zahnträgerteile nur in einer bestimmten Winkellage zu ermöglichen. So sind bei der Ausführungsform der Fig. 1 beispielhaft die Winkel zwischen den Verbindungsmitteln nicht gleichmäßig, um einen Wiederzusammenbau der Zahnträgerteile des Zahnträgers nur in einer bestimmten relativen Winkelposition zu einander zuzulassen. Bei weiteren Ausführungsformen können Nuten, Stifte oder andere Konturen vorgesehen sein oder es können Markierungen vorgesehen sein, um eine Wiedermontage nur in einer bestimmten Winkellage zuzulassen oder zu ermöglichen. Auf diese Weise ist eine Bearbeitung des Zahnträgers in einer Aufspannung möglich, wobei anschließend die Zahnträgerteile wieder voneinander gelöst werden, um sie dann im Getriebe wieder mit einander zu verbinden.

Zur Lagerung des Zahnträgers an dem Gehäuse 42 sind Wälzkörper 50 vorgesehen, welche in einem Winkel von 60° zu der Längsachse 41 des Getriebes 1 montiert sind. Dabei sind die Winkellagen der Wälzkörper 50 spiegelbildlich zu einer axialen Schnittebene des Getriebes 1 zueinander, um eine zuverlässige Lagerung des Zahnträgers in dem Gehäuse 42 zu erreichen. Bei weiteren Ausführungsformen werden auch größere oder kleinere Winkel als 60° verwendet, je nachdem, ob und wie große Axialkräfte aufzunehmen sind.

Die Wälzkörper 50 sind jeweils unmittelbar auf Zahnträgerlagerflächen 54 und 55 des ersten Zahnträgerteils 44 und des zweiten Zahnträgerteils 45 gelagert. Gehäuse-seitig sind die Wälzkörper 50 auf Gehäuselagerflächen 58 des Gehäuses 42 gelagert. Die Wälzkörper 50 rollen also jeweils unmittelbar auf den Zahnträgerlagerflächen 54 und 55 sowie auf den Gehäuselagerflächen 58. Auf diese Weise wird eine kompakte integrale Lagerung erreicht, welche wenig Bauraum beansprucht.

Weiterhin ist bei dem Ausführungsbeispiel der Fig. 1 auch das Antriebslager als integrales Lager ausgeführt, wobei der Zahnträger bzw. bei der Ausführungsform der Fig. 1 das zweite Zahnträgerteil 44 eine Antriebslagerfläche 60 aufweist, auf welcher unmittelbar Antriebslagerwälzkörper 62, welche als Rollen ausgeführt sind, abrollen. Auf der Kurvenscheibe ist eine weitere Antriebslagerfläche 64 ausgebildet, welche ebenfalls unmittelbar mit den Antriebslagerwälzkörpern 62 zusammenwirkt. Dadurch rollen die Antriebslagerwälzkörper unmittelbar auf der Kurvenscheibe 20 ab. Auf diese Weise wird ein integriertes Lager für eine kompakte Bauform geschaffen.

Die Antriebslagerfläche 60 des zweiten Zahnträgerteils 44 ist Teil eines Abtriebsseitigen Anlaufflansches 66, welcher ein Ausweichen der Schwenksegmente 24 in Abtriebs-seitiger Richtung verhindert. Durch die integrale Ausführung des Anlaufflansches 66 mit dem zweiten Zahnträgerteil 44 wird eine kompakte Bauform und eine hohe Steifigkeit erreicht.

Das erste Zahnträgerteil 45 weist einen weiteren Anlaufflansch 68 auf, welcher ein Ausweichen der Schwenksegmente 24 in die entgegengesetzte Richtung ebenfalls verhindert.

Typischerweise ist gegenüberliegend zu dem Abtrieb, also der Seite des Antriebslagers gegenüberliegend, ein weiteres Lager für die integral mit einer Antriebswelle ausgebildete Kurvenscheibe 20 vorgesehen. Dies liegt jedoch außerhalb des dargestellten Bereichs der Fig. 1. Antriebs-seitig ist u.U. auch ein größerer Bauraum in radialer Richtung vorhanden, sodass das Antriebs-seitige Lager ggf. als Lager mit separaten Laufflächen ausgeführt sein kann. Bei weiteren Ausführungsformen kann auch das Antriebslager als integrales Lager ausgeführt sein.

**Patentansprüche**

1. Getriebe (1), insbesondere Koaxialgetriebe, mit

   - einem Hohlrad (3) mit einer nach innen gerichteten Verzahnung (5),
   - einem koaxial zu dem Hohlrad angeordneten Zahnträger (11), in welchem eine Mehrzahl von Zähnen (7) zum Eingriff mit der Verzahnung (5) aufgenommen sind, wobei die Zähne (7) in dem Zahnträger (11) radial verschieblich gelagert sind,
   - einem Antriebselement mit einer Profilierung (22) zum radialen Antrieb der radial verschieblich gelagerten Zähne (7), wobei die Profilierung (22) über ihren Umfang mindestens zwei Erhebungen aufweist,
   - Wälzkörpern (23), welche auf der Profilierung (22) angeordnet sind, und
   - einer Mehrzahl von Schwenksegmenten (24) zur Lagerung der Zähne (7), wobei die Schwenksegmente (24) auf den Wälzkörpern (23) angeordnet sind,
   - **dadurch gekennzeichnet, dass** das Getriebe derart aufgebaut ist, dass zwischen einem Antrieb über das Antriebselement und einem Abtrieb über den Zahnträger (11) eine positive Übersetzung besteht,
   - wobei die Anzahl der Zähne (7) sich nach folgender Formel berechnet:

$$Z_Z = \frac{Z_I + E}{PF},$$

   wobei Zz die Anzahl der Zähne (7) im Zahnträger (11) ist, wobei ZI die Anzahl der Innenzähne des Hohlrads (3) ist und wobei E die Anzahl der Erhebungen der Profilierung (22) des Antriebselements ist und wobei PF ein Positionsfaktor ist, welcher eine ganzzahlige Zahl ist.

2. Getriebe (1) nach Anspruch 1, wobei der Zahnträger-Zahnteilungswinkel der Zähne (7) kleiner ist als der Hohlrad-Zahnteilungswinkel der Innenzähne der Verzahnung (5) des Hohlrades (3).

3. Getriebe (1) nach Anspruch 2, wobei in dem Zahnträger (11) nur jede mindestens zweite Position, welche durch den Zahnträger-Zahnteilungswinkel vorgegeben ist, mit einem Zahn (7) besetzt ist.

4. Getriebe (1) nach einem der vorhergehenden Ansprüche, wobei die Anzahl der Zähne (7) mindestens oder genau um eins größer ist als die Hälfte der Anzahl der Innenzähne der Verzahnung (5) des Hohlrades (3).

5. Getriebe (1) nach einem der vorhergehenden Ansprüche, wobei die Wälzkörper (23) in zumindest zwei in Umlaufrichtung der Kurvenscheibe parallelen Wälzkörperreihen auf der Profilierung (22) angeordnet sind.

6. Getriebe (1) nach einem der vorhergehenden Ansprüche, wobei die Profilierung (22) zumindest zwei parallele Laufflächen aufweist, welche durch ein zumindest teilweise umlaufendes Mittelbord (34) geteilt sind.

7. Getriebe (1) nach einem der vorhergehenden Ansprüche, wobei die Zähne (7) jeweils einstückig ausgeführt sind.

8. Getriebe (1) nach einem der vorhergehenden Ansprüche, wobei die Kräfte zur Führung der Zähne (7) im Zahnträger (11) um mindestens 10% gegenüber einem teilweise analog aufgebauten Getriebe mit negativer Übersetzung verringert sind.

9. Getriebe (1) nach einem der vorhergehenden Ansprüche, wobei die Innenzähne der Verzahnung (5) und die Zähne (7) jeweils Zahnköpfe aufweisen, welche im Querschnitt einem Pyramidenstumpf und/oder einer Pyramide jeweils mit gekrümmten Flanken entsprechen.

10. Getriebe (1) nach einem der vorhergehenden Ansprüche, wobei die Innenzähne der Verzahnung (5) und die Zähne (7) jeweils einen Radius auf der Spitze aufweisen.

11. Verfahren zur Herstellung eines Getriebes (1) nach einem der Ansprüche 1 bis 10.

**Claims**

1. Gear mechanism (1), in particular a coaxial gear mechanism, comprising

   - a ring gear (3) having an inwardly directed toothing (5),
   - a tooth carrier (11) which is arranged coaxially with the ring gear and in which a plurality of teeth (7) for engaging with the toothing (5) are received, the teeth (7) being mounted in the tooth carrier (11) so as to be radially movable,
   - a drive element having a profiling (22) for radially driving the teeth (7) that are mounted so as to be radially movable, the profiling (22) having at least two projections over its circumference,
   - rolling elements (23) which are arranged on the profiling (22), and
   - a plurality of pivot segments (24) for mounting the teeth (7), the pivot segments (24) being arranged on the rolling elements (23),
- **characterized in that** the gear mechanism is constructed in such a way that there is a positive gear ratio between a drive via the drive element and an output via the teeth carrier (11),
- the number of teeth (7) being calculated using the following formula:

$$Z_z = \frac{Z_I + E}{PF},$$

where Zz is the number of the teeth (7) in the tooth carrier (11), where ZI is the number of the inner teeth of the ring gear (3), where E is the number of the projections of the profiling (22) of the drive element and where PF is a position factor which is an integer.

2. Gear mechanism (1) according to claim 1, wherein the tooth carrier tooth pitch angle of the teeth (7) is smaller than the ring gear tooth pitch angle of the inner teeth of the toothing (5) of the ring gear (3).

3. Gear mechanism (1) according to claim 2, wherein, in the tooth carrier (11), only every at least second position, which is predetermined by the tooth carrier tooth pitch angle, is occupied by a tooth (7).

4. Gear mechanism (1) according to any of the preceding claims, wherein the number of teeth (7) is at least or exactly one greater than half the number of the inner teeth of the toothing (5) of the ring gear (3).

5. Gear mechanism (1) according to any of the preceding claims, wherein the rolling elements (23) are arranged on the profiling (22) in at least two rolling element rows that are parallel in the circumferential direction of the disk cam.

6. Gear mechanism (1) according to any of the preceding claims, wherein the profiling (22) has at least two parallel running surfaces which are separated by an at least partly circumferential central rib (34).

7. Gear mechanism (1) according to any of the preceding claims, wherein the teeth (7) are each designed as one piece.

8. Gear mechanism (1) according to any of the preceding claims, wherein the forces for guiding the teeth (7) in the tooth carrier (11) are reduced by at least 10% compared to a partly analogous gear mechanism having a negative gear ratio.

9. Gear mechanism (1) according to any of the preceding claims, wherein the inner teeth of the toothing (5) and the teeth (7) each have tooth heads which correspond in cross section to a truncated pyramid and/or a pyramid each having curved flanks.

10. Gear mechanism (1) according to any of the preceding claims, wherein the inner teeth of the toothing (5) and the teeth (7) each have a radius on the tip.

11. Method for producing a gear mechanism (1) according to any of claims 1 to 10.

**Revendications**

1. Engrenage (1), en particulier engrenage coaxial, avec

  - une couronne dentée (3) avec une denture (5) orientée vers l'intérieur,
  - un porte-dents (11) disposé de manière coaxiale à la couronne dentée, dans lequel sont reçues une pluralité de dents (7) destinées à venir en prise avec la denture (5), où les dents (7) sont montées de manière déplaçable radialement dans le porte-dents (11),
  - un élément d'entraînement avec un profilage (22) destiné à l'entraînement radial des dents montées de manière déplaçable radialement (7), où le profilage (22) présente sur sa circonférence au moins deux élévations,
  - des éléments roulants (23) qui sont disposés sur le profilage (22), et
  - une pluralité de segments pivotants (24) destinés au montage des dents (7), où les segments pivotants (24) sont disposés sur les corps roulants (23),
  - **caractérisé par le fait que** l'engrenage est construit de sorte qu'il existe entre un entraînement par l'intermédiaire de l'élément d'entraînement et une sortie par l'intermédiaire du porte-dents (11) un rapport de transmission positif,
  - dans lequel le nombre de dents (7) est calculé selon la formule suivante:

$$Z_z = \frac{Z_I + E}{PF},$$

  - où Zz est le nombre de dents (7) dans le porte-dents (11), où ZI est le nombre de dents intérieures de la couronne dentée (3) et où E est le nombre d'élévations du profilage (22) de l'élément d'entraînement et où PF est un facteur de position, qui est un nombre entier.

2. Engrenage (1) selon la revendication 1, dans lequel l'angle de pas de dents de porte-dents des dents (7) est inférieur à l'angle de pas de dents de la couronne dentée des dents intérieures de la denture (5) de la couronne dentée (3).

3. Engrenage (1) selon la revendication 2, dans lequel, dans le porte-dents (11), seule chaque au moins deuxième position, qui est prédéterminée par l'angle de pas de dents du porte-dents, est occupée par une dent (7).

4. Engrenage (1) selon l'une des revendications précédentes, dans lequel le nombre de dents (7) est au moins ou exactement de 1 supérieur à la moitié du nombre de dents intérieures de la denture (5) de la couronne dentée (3).

5. Engrenage (1) selon l'une des revendications précédentes, dans lequel les éléments roulants (23) sont disposés sur le profilage (22) en au moins deux rangées d'éléments roulants parallèles dans la direction circonférentielle du disque à came.

6. Engrenage (1) selon l'une des revendications précédentes, dans lequel le profilage (22) présente au moins deux surfaces de roulement parallèles qui sont divisées par un rebord central (34) au moins partiellement circonférentiel.

7. Engrenage (1) selon l'une des revendications précédentes, dans lequel les dents (7) sont réalisées, chacune, d'une seule pièce.

8. Engrenage (1) selon l'une des revendications précédentes, dans lequel les forces de guidage des dents (7) dans le porte-dents (11) sont réduites d'au moins 10% par rapport à un engrenage construit de manière partiellement analogique à rapport de transmission négatif.

9. Engrenage (1) selon l'une des revendications précédentes, dans lequel les dents intérieures de la denture (5) et les dents (7) présentent, chacune, des têtes de dent qui correspondent, en coupe transversale, à un tronc de pyramide et/ou à une pyramide, chacun à flancs courbés.

10. Engrenage (1) selon l'une des revendications précédentes, dans lequel les dents intérieures de la denture (5) et les dents (7) présentent, chacune, un rayon sur la pointe.

11. Procédé de fabrication d'un engrenage (1) selon l'une des revendications 1 à 10.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007011175 A1
- DE 102015105525 A1
- DE 102015105524 A1